# EUROPEAN PATENT SPECIFICATION

(11) **EP 2 498 059 B1**
(45) Date of publication and mention of the grant of the patent: **29.04.2020**
(21) Application number: 11001955.1
(22) Date of filing: 09.03.2011
(51) Int. Cl.: G01C 21/34, G01C 21/36, G06T 17/05

(54) **Navigation route calculation using three-dimensional models**
Navigationsrutenberechnung unter Nutzung dreidimensionaler Modelle
Calcul de route de navigation utilisant des modèles tridimensionnels

(43) Date of publication of application: 12.09.2012
(73) Proprietor: Harman Becker Automotive Systems GmbH, 76307 Karlsbad (DE)
(72) Inventor: Kunath, Peter, 80999 München (DE); Pryakhin, Alexey, 80689 München (DE); Schupfner, Markus, 76307 Karlsbad (DE)
(74) Representative: Grünecker Patent- und Rechtsanwälte PartG mbB

(56) References cited:
- WO-A2-2006/036561
- JP-A- 2000 353 295
- JP-A- 2004 226 199
- US-A- 5 913 917
- US-A1- 2007 005 237
- US-B1- 6 173 231

## Description

### Field of the Invention

The present invention relates to a method for route calculation in a navigation device.

### Background Art

Conventional navigation systems determine a route for guiding a user from a current location to a desired location based on geographic data and on data such as for example travel distance, travel time, traffic information, and costs. Some of the conventional navigation systems may guide a user to a parking place.

However, conventional navigation systems do not consider awkward conditions when calculating the route. For example, when a vehicle driver while being guided on the route intends to turn left or right, planting and building along the road can cause a poor sight. It would be desirable that a route is calculated avoiding for example intersections with poor sight, or that a warning disposes the driver to be more careful at this section of the route. Another example of an awkward condition is heat inside a vehicle which can stress the driver of the vehicle. Since the use of an air-condition increases the power consumption of the vehicle and decreases the humidity of the air inside the vehicle, the driver may prefer a shady route instead of using the air condition. When the desired location has been reached, the user may prefer a shady parking place for the vehicle. Conventional navigation systems do not account for a user's preference for stress-free routes and for secure locations for parking.

It is, therefore, an object of the present invention to provide a method for determining a route in a navigation system which avoids awkward conditions on the route while driving, and/or at the location where the vehicle is parked, thereby enhancing the safety of a user and a user's vehicle.

US 5 913 917 A discloses a method for determining which of several candidate routes is optimal using a digitalized terrain map for modelling the local topography of the road.

US 6 173 231 B1 discloses a vehicle equipped with an ice hazard safety system that use ice risk values stored in a geographical database.

JP2000353295 A discloses a method for determining a route taking into account the solar irradiation level, wherein a sunshine cost for route links is calculated based on solar altitude data, solar azimuth data, weather information based and three-dimensional data.

### Description of the Invention

The above-mentioned object is achieved by the method for determining a route in a navigation system according to claim 1.

A navigation system comprises, for example, a navigation device and a base station, wherein the navigation device is one of a navigation device installed in a vehicle, a mobile navigation device, a mobile phone, a Personal Digital Assistant (PDA), a portable terminal, and a home computer. The navigation system may comprise a unit with a data base and a Global Positioning System (GPS) navigation device for acquiring position data to locate a user of the navigation system on a road in a map database. A receiving unit of the navigation system may receive signals from satellites and determine the transit time of the signal. Based on the signal transit time, the current position of the user of the navigation system is determined. The current position of the user can also be determined by determining acceleration and velocity of the navigation device. Using the data base, the navigation device is able to calculate a route to another location and guide the user accordingly. The database may be located distant from the navigation device.

Three-dimensional environmental model data are used for reproducing a digital three-dimensional model of a terrain environment. The term "terrain environment" generally relates to the surface of the earth and all objects thereon and, particularly, also to a geographic region or a landscape, an urban area, a city, a village, an open space and a road space. The digital three-dimensional model represents the surface of the earth and all the objects thereon. For example, roads, streets, buildings, plants, bridges, stairways, rivers and shores are reproduced as three-dimensional objects in the three-dimensional environmental model. The three-dimensional environmental model data include data representing digital height information and terrain elevations such as, for example, mountains. The three-dimensional environmental model may be a dynamic model. The term "dynamic" means that the three-dimensional environmental model is reproduced according to a zoom level. Different zoom levels may correspond to different resolutions of the three-dimensional environmental model data. For example, a three-dimensional environmental model with a high resolution represents even buildings and trees whereas a low resolution allows representing just hills and mountains.

Determining a route from a current position to a desired position based on the three-dimensional environmental model data implies mathematically calculating the route by using three-dimensional information about the terrain environment in a navigation algorithm. The calculation of a route can be based on a cost function and cost values depending on data of the three-dimensional environmental model (for details see below). The employment of cost functions in route calculation is, in principal, known to a skilled person.

The calculation of an optimized route in a navigation system may be performed by a Dijkstra Algorithm, in particular an A*-Algorithm. Runtime of the algorithm may be more efficiently by combining known road segments in a major segment. The major segment is then considered in the algorithms instead of many known and smaller road segments. A route may be determined based on the three-dimensional environmental model data according to particular criteria selected by a user of the navigation system. Route calculation in navigation systems is usually based on weighting road segments and intersections by using cost values. Based on the three-dimensional environmental model data the cost values may be defined or modified according to a user's criteria. For example, the user prefers to expeditiously arrive at a destination, while road segments with large differences in elevation should be avoided. For each road segment the difference of elevation may be determined. An (additional) cost value being proportional to the difference in elevation of the road segment may be assigned to each road segment. The route may be calculated based on a total cost value determined by summarizing the cost value of the respective travel time and the additional cost value being proportional to the difference in elevation.

By using the three-dimensional information about a terrain environment provided by the three-dimensional environmental model data an optimized route is determined avoiding awkward conditions for a user resulting for example from large differences in elevation at different road segments. This is for example advantageous for trucks or campers in a mountainous region. An enhanced safety for the user and his vehicle is achieved.

According to an embodiment of the above described method, the three-dimensional environmental model data comprises data representing at least one three-dimensional environmental model object which may represent one of a street, a road, a building, a vegetation, a plant, a planting, a hill and a mountain of the terrain environment, and the route is determined based on the at least one three-dimensional environmental model object data. For example, intersections allowing a driver only a poor sight due to vegetation or buildings may be determined based on the three-dimensional environmental model data. When calculating the route, an additional cost value may be assigned to such intersections with poor sight and considered in evaluating a cost function. A route may be calculated on which awkward sections, for example narrow streets or locations with poor sight are avoided. Such locations may be for example narrow streets or locations with poor sight. The safety of the user of the navigation system is enhanced.

According to an embodiment of the herein disclosed method for determining a route in a navigation system, a three-dimensional environmental model object is identified at a section of the determined route based on the three-dimensional environmental model data. The three-dimensional environmental model object is represented by the three-dimensional environmental model object data. A message to a user of the navigation system is provided based on the identified three-dimensional environmental model object. Vegetation or buildings may cause a poor sight on the road such that the user of the navigation system is required to be highly careful when passing another road user or turning to another direction. For example, when a route is determined on which a situation at a section of the route occurs where the driver's sight is hindered due to plants or buildings, a warning may be provided to the user in the form of a voice message. The message may include a warning relating to a frozen surface or leaves and branches on the road. In an open landscape, the message may include a warning which relates to a gust of wind. Providing a warning message is advantageous in that the user of the navigation system may be careful, for example, in the form of reducing the vehicle's speed. Warning messages enhance the safety of a user of the navigation system.

According to a further embodiment of the herein disclosed method for determining a route in a navigation system, the three-dimensional environmental model data comprises digital terrain model data (DTM-data), and the route is determined based on the DTM-data. Several institutes or providers offer DTM-data that are obtained by using remote sensing techniques or land surveying. Determining the route based on the DTM-data means that three-dimensional information from a DTM are used in the calculation of the route. The digital terrain model stored on a digital file provides a three-dimensional detailed representation of topographical variations of the earth's surface, elevation, and cultural features such as buildings and roads as well as vegetation.

According to a further embodiment of the invention, the method for determining a route in a navigation system further comprises the step of providing information data about weather, date and time, and wherein the route is further determined based on the information data about weather, date and time. Watershed delineation may be performed when calculating the route. By including the information data about the weather, date and time in the calculation of the route, for example, an up coming storm can be avoided by guiding the user alternatively a route around the stormy area. In a further example, road segments and/or intersections are determined based on the three-dimensional environmental model data which are protected against a gust of wind due to buildings, mountains or hills. Similar, road segments and/or intersections may be identified which are not protected against a gust of wind. When calculating the route, an additional cost value may be assigned to such road segments and/or intersections which are not protected against wind. By considering the additional cost values in evaluating the cost function the safety of the user of the navigation system is enhanced.

According to a further embodiment, the three-dimensional environmental model data comprises DTM-data. Further, a direction of a water stream flow in the terrain environment is estimated based on the DTM-data and the information data about weather, date and time. The route is determined based on the estimated direction of the water stream flow in the terrain environment. The water is for example, one of running rain water, running snow water, water flowing downwards a hill, and overflowing water from a river, a rivulet, a creek or a lake. The DTM contains elevation data and height information of the terrain environment. The direction of the water stream flow is for example from a higher location to a lower location in the terrain environment which is represented by the three-dimensional DTM-data. For example, a location or area in the terrain environment may be determined where the risk of flooding is low or high. Further, the determination of the direction of water flow on a road may be important in view of icing on the surface of the road. The safety of a user of the navigation system is enhanced when risks of icing and flooding are considered in route calculation.

According to a further embodiment of the invention the method comprises the step of determining a position of a shadow of a three-dimensional environmental model object based on the three-dimensional environmental model data and the information data about weather, date and time, and wherein the route is determined based on the determined position of the shadow of the three-dimensional environmental model object represented by the three-dimensional environmental model object data. The position of the shadow comprises direction, length and latitude of the shadow of the three-dimensional environmental model object. Time may be metered by a solar clock. The solar clock shows at any time "winter time" and 36 minutes less than Central European Time. In order to determine the change of the position of the shadow from day to day at the same time, the Equation of time and the horizontal angle are to be determined.

A route may be determined which guides on a road where shadow is maximised. Shadow may be obtained by a tree, a building or a mountain. The determined route may guide a user through an avenue or in the near of a mountain. For example, the user prefers to expeditiously arrive at a destination, while sunny road segments should be avoided. In such a case, shadow area for each road segment and each intersection as well as for each time may be calculated based on the three-dimensional environmental model data. An additional cost value being proportional to the sunny area of the road segment, the intersection, respectively, may be assigned to each road segment and each intersection at each time. The calculation of the route may be based on a total cost value determined by summarizing the cost value of the respective travel time and the additional cost value being proportional to the shadow area. In case the user prefers avoiding sunny road segments and/or intersections without taking into account the resulting travel time, the respective sunny area may be defined as a cost value. Heat inside a vehicle is reduced without operating an air condition. Blinding of the user by the sun is avoided. Fuel is saved due to avoidance of extensive use of the air condition while the safety of the user is enhanced.

According to a further embodiment of the method for determining a route in a navigation system, information from Traffic Message Channel (TMC) and/or Transport Protocol Experts Group (TPEG) is provided, and the route is determined based on the information from TMC and/or TPEG.

According to a further embodiment of the invention, a location as a place for parking is determined based on at least one of the three-dimensional environmental model data, DTM-data, information data about weather, date and time, and information from TMC and/or TPEG. The determined location as the parking place is indicated to the user of the navigation system. For example, a determined location in a city may be selected to be in the shadow of a building or a tree such that the parked vehicle is not heated by the sun. In case of a storm, for example, a location under a tree is avoided as a place for parking due to the risk of down falling branches. A location where the risk of flooding is high may be avoided. The weather conditions and their influence on environmental factors such as, for example, the position of a shadow, may be prognosticated. The safety of the user of the navigation system and the vehicle is enhanced.

According to a further embodiment of the invention, the three-dimensional environmental model data comprises a reflection model representing reflections of GPS signals by the three-dimensional environmental model object, and the method further comprises that a current position of a user of the navigation system is determined based on the reflection model and GPS information. The reflection model represents the reflection, for example, by plants and buildings. The reflection model may be deduced from the three-dimensional environmental model data. Buildings and vegetation in a city may cause that signals from GPS satellites are not properly received by the navigation system. The position calculated based on the received GPS signal may be corrected by the data reproducing the reflection model. The current position of the user of the navigation system is determined more precisely.

According to the invention, criteria are selected by a user of the navigation system, wherein the selected criteria correspond to an environmental parameter, wherein the environmental parameter includes a weather condition, elevations in the environment, a shadow and a slope of a road and the route is determined based on the selected criteria. The environmental parameter is derived from the three-dimensional environmental model data. According to an example, determination of the route is performed based on maximizing or minimizing of one or more cost functions corresponding to the selected criteria, and/or on criteria provided with different weights. Different criteria may contribute to the calculation of the route. The user can select which one/ones of the criteria shall contribute to the calculation. Moreover, the user may prioritize particular criteria in the sense that high-priority criteria contribute more to the calculation of the route than the low-priority criteria. In particular, the route may be determined such that a cost function corresponding to a criterion is maximized or minimized. For example, a selected criterion might be the overall shadowing of a route to a target. In this case, a route may be calculated along which the shadow is maximized which can be realized inter alia due to the consideration of the three-dimensional environmental model data. In this example, shadow is the selected criterion and the cost function can be shadow intensity per Meter of the route. In maximizing the cost function other conditions might have to be satisfied. Other conditions may include limits for acceptable detours, differences in elevation along the route to be determined, etc. In addition, different criteria may be weighted differently. The user may select calculation of the route based on elevation and shadow along a route to a target, and these criteria may contribute to the calculation of the route by different percentages.

According to a further embodiment of the invention, the route is determined by means of one or more cost functions and cost values depending on the three-dimensional environmental model data.

According to the invention, a user of the navigation system is guided according to the determined route.

The present invention also provides a navigation system for determining a route according to claim 5. The navigation system comprises a means for providing three-dimensional environmental model data representing a terrain environment. The navigation system is configured to determine the route based on the three-dimensional environmental model data. The means for providing three-dimensional environmental model data may comprise a database or a memory.

According to an embodiment of the invention, the navigation system further comprises a navigation device which is one of a mobile navigation device, a navigation device installed in a vehicle, a mobile phone, a PDA, and a portable terminal. The navigation system can be distributed such that the navigation system comprises the navigation device and a base station located apart from the navigation device. For example, the base station and the navigation device communicate wirelessly, for example, via Internet, with each other. A vehicle is for example one of a car, a truck, a camper, a bus, a motorcycle, and a bicycle.

Additional features and advantages of the present invention will be described with reference to the drawings. In the description, reference is made to the accompanying figures that are meant to illustrate preferred embodiments of the invention. It is understood that such embodiments do not represent the full scope of the invention.
Figure 1 is a flow chart showing method steps for determining a route in a navigation system according to the invention.
Figure 2 shows a cross section of a digital terrain model and a digital surface model.
Figure 3 illustrates a digital elevation model.
Figure 4 illustrates a car in an avenue offering shadow.
Figure 5 shows a determined route guiding through awkward weather conditions and a determined route avoiding awkward weather conditions.
Figure 6 shows a building offering shadow to a parking place.
Figure 7 illustrates a reflection model.

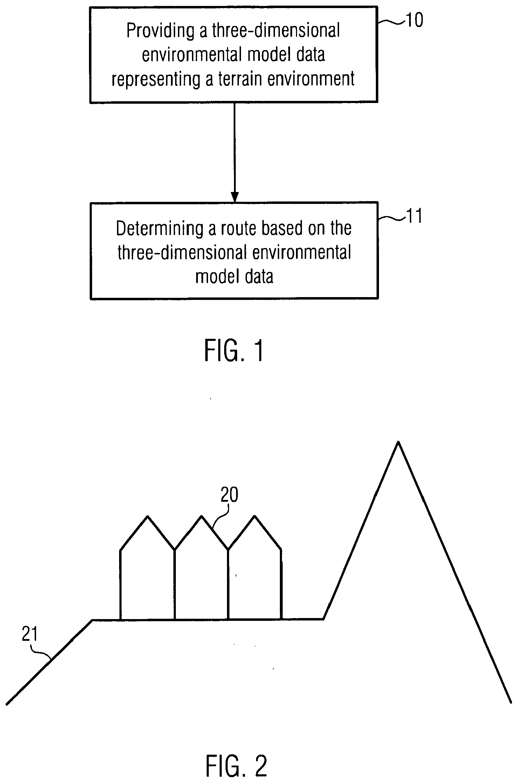

In the present invention, three-dimensional environmental model data are used for calculating a route in a navigation system. Figure 1 is a flow chart which shows steps of the method for determining the route in the navigation system. In step 10 of the flow chart, three-dimensional environmental model data is provided which represents a terrain environment. The three-dimensional modal data may be used to reproduce a three-dimensional environmental model. From the three-dimensional environmental model three-dimensional information can be obtained about, for example, height, position and dimension of buildings and trees along a street, a broadness of a street, and a slope of a street. In step 11 of the flow chart of Figure 1, a route is determined based on the three-dimensional environmental model data. In a navigation system, a route from a current position to a desired position is calculated by using the three-dimensional environmental model data in a navigation algorithm. Additionally, two-dimensional geographic data may be used in determining the route.

Figure 2 illustrates a cross section of a digital terrain model (DTM) including a surface model and a digital elevation model. A DTM is stored in a digital file consisting of terrain elevations for ground positions at regularly spaced horizontal intervals. In Figure 2, a surface 21 and objects on the surface such as houses 20 are shown. The three-dimensional environmental model data comprise three-dimensional environmental object data which represent objects such as streets, roads, buildings, vegetation, plants, planting, hills and mountains. The three-dimensional environmental object data are not restricted thereto and may also represent for example rivers, rivulets and lakes. A DTM may be reproduced by processing x-, y-, and z-coordinate values of a surface.

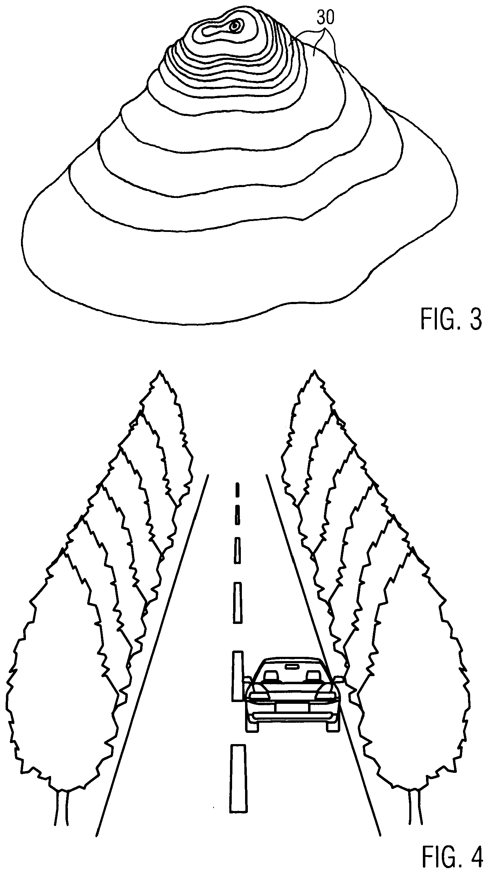

A digital elevation model may be reproduced by computing raster data, vector data or a Triangulated Irregular Network (TIN). Raster data consist of raster points, for example, pixels. The raster points have one or more values such as height value or colour information. For a TIN format raster data are computed as a network of irregular triangles. Vector data include for example, information about coordinates, topology and spatial attributes. Figure 3 illustrates an example of an elevation model reproduced by vector data. Level curves 30 define a specific height. Height information from the three-dimensional environmental model data can be used for identifying slopes of a road or a street. The navigation algorithm may be performed such that a route on a road or a street having an extreme slope is avoided. Differences in height may be taken into account in the calculation of the route according to particulate criteria selected by a user of the navigation system. For example, the user driving a motorcycle prefers a route that guides through a mountains and includes as much as possible serpentines whereas a driver of a car prefers avoiding a route through a mountains in order to save power and to preserve the engine of the car.

One or more three-dimensional environmental model objects may be identified which reside along a road or a street. For example, buildings and/or trees may cause a poor sight for directing a vehicle by a user of the navigation system. An object may be identified, for which the user of the navigation system searched, according to the three-dimensional information available in the three-dimensional environmental model object data. The user of the navigation system may be notified by providing a message, for example by voice. The message may contain a warning or information.

Figure 4 illustrates a car driven by a user of the navigation system through an avenue. Trees along the street may offer shadow or loose leaves and branches according to the respective weather conditions. Information data about weather, date and time may be provided and included when calculating the route by the navigation algorithm.

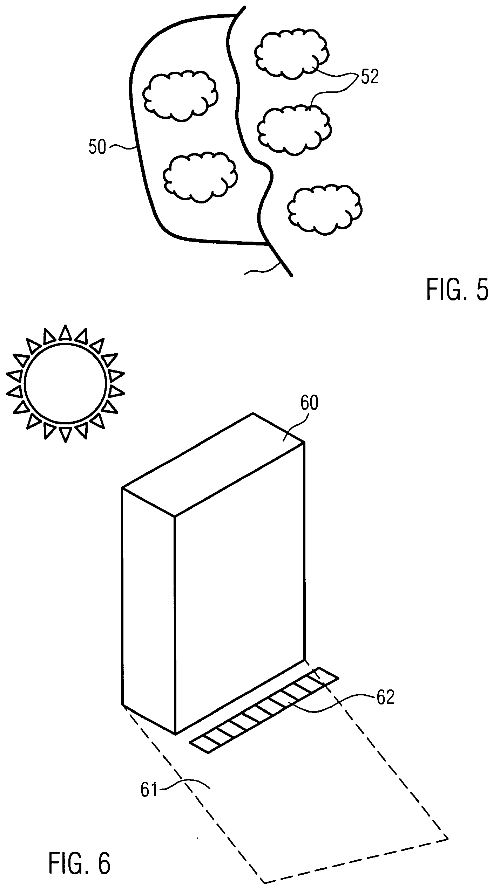

Figure 5 shows a route 51 calculated without information data about weather, date and time, and a route 50 circumnavigating the stormy clouds 52. Route 50 is calculated by including information data about weather, date and time in the navigation algorithm. By considering weather information about a storm arising in a geographical region where a route would guide through, an alternative route is determined by an example of the inventive method avoiding the road section through the region which is affected by the storm. Calculating the route based on the three-dimensional environmental model data and the information data about weather, date and time may lead to a determined route which guides a user of the navigation system along an alternative route in case when a conventionally defined route would lead through an area with a higher risk of being flooded due to rainfall or snow water near a lake, a river or a rivulet.

Figure 6 illustrates a building 60 offering shadow 61 for a parking place 62. Heat may be minimized as a factor dependent on the environment. The position of the shadow may be calculated based on the three-dimensional environmental model data while considering date and time.

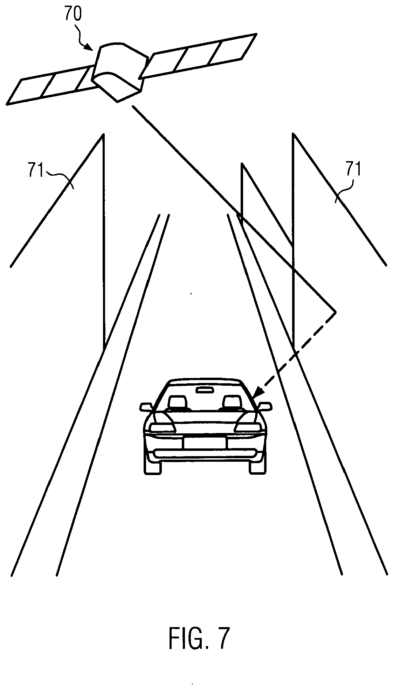

Figure 7 illustrates a satellite 70 sending a signal which is reflected at building 71. A reflection model representing the terrain environment may be derived from the three-dimensional environmental model data. The reflection model may be used to correct the determination of the GPS-position of a user of the navigation system.

## Claims

1. A method for determining a route in a navigation system, the method comprising:
providing three-dimensional environmental model data representing a terrain environment;
selecting criteria by a user of the navigation system, wherein the selected criteria correspond to an environmental parameter, the environmental parameter including a weather condition, elevations in the environment, a shadow and a slope of a road, wherein the environmental parameter is derived from the three-dimensional environmental model data;
mathematically calculating the route by using the three-dimensional environmental model data and the selected criteria in a navigation algorithm; and
guiding a user of the navigation system according to the calculated route.

2. The method of claim 1, wherein the three-dimensional environmental model data comprises a digital terrain model data, DTM-data, and wherein the step of calculating the route is based on the DTM-data.

3. The method of one of claims 1 or 2 further comprising the step of providing information data about weather, date and time, and wherein the step of calculating the route is further based on the information data about weather, date and time.

4. The method of one of claims 1 - 3, wherein the route is calculated by means of one or more cost functions and cost values depending on the three-dimensional environmental model data.

5. A navigation system for determining a route, comprising:
a means for providing three-dimensional environmental model data representing a terrain environment; and
wherein the navigation system is configured to receive criteria selected by a user of the navigation system, wherein the selected criteria correspond to an environmental parameter, the environmental parameter including a weather condition, elevations in the environment, a shadow and a slope of a road, wherein the environmental parameter is derived from the three-dimensional environmental model data, to mathematically calculate the route by using the three-dimensional environmental model data and the selected criteria in a navigation algorithm, and to guide a user of the navigation system according to the calculated route.

6. The navigation system of claim 5, wherein the navigation system comprises a navigation device being one of a mobile navigation device, a navigation device installed in a vehicle, a mobile phone, a Personal Digital Assistant, PDA, and a portable terminal.

## Patentansprüche

1. Verfahren zum Bestimmen einer Route in einem Navigationssystem, wobei das Verfahren Folgendes umfasst:
Bereitstellen dreidimensionaler Umgebungsmodelldaten, die eine Geländeumgebung darstellen;
Auswählen von Kriterien durch einen Nutzer des Navigationssystems, wobei die ausgewählten Kriterien einem Umgebungsparameter entsprechen, wobei der Umgebungsparameter ein Witterungsverhältnis, Erhebungen in der Umgebung, einen Schatten und eine Neigung einer Straße beinhaltet, wobei der Umgebungsparameter von den dreidimensionalen Umgebungsmodelldaten abgeleitet ist;
mathematisches Berechnen der Route durch Nutzung der dreidimensionalen Umgebungsmodelldaten und der ausgewählten Kriterien in einem Navigationsalgorithmus; und
Führen eines Nutzers des Navigationssystems entsprechend der berechneten Route.

2. Verfahren nach Anspruch 1, wobei die dreidimensionalen Umgebungsmodelldaten digitale Geländemodelldaten (DTM-Daten) umfassen und wobei der Schritt des Berechnens der Route auf den DTM-Daten beruht.

3. Verfahren nach einem der Ansprüche 1 oder 2, ferner umfassend den Schritt des Bereitstellens von Informationsdaten zu Wetter, Datum und Zeit, und wobei der Schritt des Berechnens der Route ferner auf den Informationsdaten zu Wetter, Datum und Zeit beruht.

4. Verfahren nach einem der Ansprüche 1-3, wobei die Route mit Hilfe einer oder mehrerer Kostenfunktionen und Kostenwerte entsprechend den dreidimensionalen Umgebungsmodelldaten berechnet ist.

5. Navigationssystem zum Bestimmen einer Route, das Folgendes umfasst:
eine Einrichtung zum Bereitstellen von dreidimensionalen Umgebungsmodelldaten, die eine Geländeumgebung darstellen; und
wobei das Navigationssystem dazu konfiguriert ist, von einem Nutzer des Navigationssystems ausgewählte Kriterien zu empfangen, wobei die ausgewählten Kriterien einem Umgebungsparameter entsprechen, wobei der Umgebungsparameter ein Witterungsverhältnis, Erhebungen in der Umgebung, einen Schatten und eine Neigung einer Straße beinhaltet, wobei der Umgebungsparameter von den dreidimensionalen Umgebungsmodelldaten abgeleitet ist, um mathematisch die Route durch Nutzung der dreidimensionalen Umgebungsmodelldaten und der ausgewählten Kriterien in einem Navigationsalgorithmus zu berechnen und um einen Nutzer des Navigationssystems entsprechend der berechneten Route zu führen.

6. Navigationssystem nach Anspruch 5, wobei das Navigationssystem eine Navigationsvorrichtung umfasst, die eines von einer mobilen Navigationsvorrichtung und einer in einem Fahrzeug, einem Mobiltelefon, einem Personal Digital Assistant (PDA) und einem tragbaren Endgerät installierten Navigationsvorrichtung ist.

## Revendications

1. Procédé de détermination d'une route dans un système de navigation, le procédé comprenant :
la fourniture de données de modèle environnemental tridimensionnel représentant un environnement de terrain ;
la sélection de critères par un utilisateur du système de navigation, dans lequel les critères sélectionnés correspondent à un paramètre environnemental, le paramètre environnemental comprenant des conditions météorologiques, des élévations dans l'environnement, une ombre et une pente d'un chemin, dans lequel le paramètre environnemental est dérivé des données de modèle environnemental tridimensionnel ;
le calcul mathématique de la route en utilisant les données de modèle environnemental tridimensionnel et les critères sélectionnés dans un algorithme de navigation ; et
le guidage d'un utilisateur du système de navigation en fonction de la route calculée.

2. Procédé selon la revendication 1, dans lequel les données de modèle environnemental tridimensionnel comprennent des données de modèle de terrain numérique, données-DTM, et dans lequel l'étape de calcul de la route est basée sur les données-DTM.

3. Procédé selon l'une des revendications 1 ou 2, comprenant en outre l'étape de fourniture de données d'informations concernant la météo, la date et l'heure, et dans lequel l'étape de calcul de la route est en outre basée sur les données d'informations concernant la météo, la date et l'heure.

4. Procédé selon l'une des revendications 1 à 3, dans lequel la route est calculée au moyen d'une ou plusieurs fonctions de coût et valeurs de coût dépendant des données de modèle environnemental tridimensionnel.

5. Système de navigation de détermination d'une route, comprenant :
un moyen de fourniture de données de modèle environnemental tridimensionnel représentant un environnement de terrain ; et
dans lequel le système de navigation est configuré pour recevoir les critères sélectionnés par un utilisateur du système de navigation, dans lequel les critères sélectionnés correspondent à un paramètre environnemental, le paramètre environnemental comprenant des conditions météorologiques, des élévations dans l'environnement, une ombre et une pente d'un chemin, dans lequel le paramètre environnemental est dérivé des données de modèle environnemental tridimensionnel, pour calculer mathématiquement la route en utilisant les données de modèle environnemental tridimensionnel et les critères sélectionnés dans un algorithme de navigation, et pour guider un utilisateur du système de navigation en fonction de la route calculée.

6. Système de navigation selon la revendication 5, dans lequel le système de navigation comprend un dispositif de navigation qui est l'un parmi un dispositif de navigation mobile, un dispositif de navigation installé à bord d'un véhicule, un téléphone mobile, un assistant électronique de poche, ADP, et un terminal portable.
